# EUROPEAN PATENT SPECIFICATION

(11) **EP 2 555 453 B1**
(45) Date of publication and mention of the grant of the patent: **10.07.2013**
(21) Application number: 11290361.2
(22) Date of filing: 04.08.2011
(51) Int. Cl.: H04J 14/02

(54) **Method of transmitting signals**
Verfahren zur Übertragung von Signalen
Procédé de transmission de signaux

(43) Date of publication of application: 06.02.2013
(73) Proprietor: Alcatel Lucent, 75007 Paris (FR)
(72) Inventor: Krimmel, Heinz, 70825 Korntal-Muenchingen (DE); Schmuck, Harald, 71701 Schwieberdingen (DE)
(74) Representative: Wetzel, Emmanuelle

(56) References cited:
- WO-A1-02/054683
- US-B1- 7 295 777

## Description

### Field of Invention

The present invention relates to a method of transmitting signals in an optical communication network, an aggregation device, and an optical communication network.

### Background

PONs are mainly grouped into Time-Divisian-Multiple-Access PONs (= TDM-PONs) and Wavelength-Division-Multiple-Access PONs (= WDM-PONs), depending on how multiple subscribers share the same ODN, e.g. a common optical feeder fibre (PON = Passive Optical Network; ODN = Optical Distribution Network).

Conventional TDM-based PON transmission systems using power splitting according to the ITU-T G.98x series show a high distribution loss which limits the bridgeable fibre link length and/or the data rate (ITU = International Telecommunication Union; ITU-T = ITU Telecommunication Standardization Sector). The main problem is usually that the signal level at the ONT drops too low to be error-free detectable (ONT = Optical Network Terminal). Attempts to address that problem by means of active reach extension devices, e.g. optical amplifiers or signal regenerators, result in additional complexity and cost. Typically the upstream direction is the limiting link.

A λ-dependent router, e.g. an AWG router, as commonly used in a WDM-PON does show a smaller insertion loss than an optical power splitter with the same port count, thus assuring a lower distribution loss in a WDM-PON than in a TDM-PON (λ = wavelength; AWG = Arrayed Waveguide Grating). However a disadvantage of a WDM-PON is that it involves considerably higher costs than a TDM-PON for the optical sources involved. Particularly, the WDM technology depends on a strict λ-stability of the lasers used as light sources, e.g. requiring costly measures such as cooling equipment.

It is the object of the present invention to provide an improved optical communication network such as a PON.

Relevant prior art in disclosed in US 7295777 and WO 02/054683.

### Summary

An object of the present invention is achieved by a method according to claim 1. . Another object of the present invention is achieved by an aggregation device according to one of claims 7 to 12.

Another object of the invention is achieved by an optical communication network according to claim 13.

The invention works with light sources, in particular lasers, whose light is allowed to drift wavelength-wise, e.g. due to ambient thermal changes. Such λ-variable light sources are simpler and cheaper than light sources with a strict A-stability. The impact of the λ-drift is eliminated by means of a λ-selective switch, e.g. in form of a switch matrix such as a 2-dimensional MEMS switch (MEMS = Micro-Electro-Mechanical Systems). The adaptation to a λ-drift of a light source by means of the λ-selective switch makes it possible to exploit the reladvely low distribution loss of a λ-sensitive multiplexer, e.g. an AWG, although λ-drifting light sources are used. Thus the invention relies on the utilisation of a combination of a switch and a multiplexer for a transmission of UL (= uplink) signals in time multiplex.

The idea underlying the invention is that basically the aggregation network mimics the function of a power-splitting PON, i.e. a signal-agnostic transparency and multiplexing, while nevertheless exploiting the lower attenuation - in comparison to signal power splitting with the same number of ports - of a wavelength routing network. The lower link loss originates from the multiplexing process, A wavelength selective router directs all the signal power incident within one wavelength channel to a single output port. To the link only the multiplexer's excess loss is added. In contrast, a power splitter's insertion loss is dominated by its intrinsic loss from broadcasting incident power to all output ports. This insertion loss increases with the number of ports at a rate of at least 3 dB per doubling the number of ports. Insertion loss of such reciprocal networks in opposite direction (i.e. as combiner) is identical to the splitting direction loss.

Transparency is achieved by selecting for each subscriber line and signal to be transferred the right wavelength router port, i.e. the port where the passband matches the signal wavelength. This automatic adaptation function is envisaged to be performed without local power supply, e.g. remote optical powering, by optical switches which can be operated at very low power and zero stafic-state power. The invention comprises a broad concept of a time-variant, adaptive PON which involves a function of a dynamic, non-static power splitter.

Therefore the invention is a paradigm shift, inverting the power-splitting PON approach, but without resorting to the stringent requirements of the strict wavelength scheme of WDM-PONs and the related tunability of subscriber-sided transmitters, and also avoiding the optical seeding Rayleigh scattering limitations.

The invention achieves a significant reduction of distribution loss, leading to higher bit rates without active amplification, i.e. retaining a truly passive optical network. Consequently the invention provides longer feeder fibre capabilities or lower transmit power needs e.g. electrical energy savings, higher splitting factors or higher transport capacity per terminal. Thus the invention provides an attractive way to up-grade a PON with the advantages of a WDM network.

In particular, the invention reduces the network distribution optical loss, i.e. attenuation, in a high-splitting high-speed PON, thus significantly improving the reach. For example, the invention renders possible a reduction of attenuation of more than 10 dB per OLT-ONU link in a 64-way split PON network (OLT = Optical Line Terminal; ONU = Optical Network Unit).

Further advantages are achieved by embodiments of the invention indicated by the dependent claims.

According to an embodiment of the invention, the distribution of wavelengths over the allocated wavelength band is important for the probability to find a suitable and exclusive multiplexer port for each ONU. A broad spread of production wavelengths is desirable here and an intentional statistical mix of ONU production lots with non-uniform wavelengths may be pursued.

According to an embodiment of the invention, a wavelength of at least one of the transmitters is tuned. Tuning can be achieved by thermal tuning, e.g. by laser chip heating. The tuning is preferably used to retain a once established association of a second termination device with a wavelength passband defined by a wavelength channel port of the wavelength multiplexer. The tuning can also be used to shorten the time period during which there is no association of a second termination device with a wavelength passband defined by a wavelength channel port of the wavelength multiplexer, as it may happen during a λ-drift of a transmitter light source. After a transmitter's wavelength has drifted out of a first passband it is possible that the transmitter light source is heated or cooled in order to reach another available passband faster than it would be possible by relying on a free λ-drift; typically the drift rate of a temperature-induced free wavelength drift is in the range of 0.1 nm/K.

According to an embodiment of the invention, the method further comprises the steps of de-multiplexing, from the one or more common optical waveguides, a downlink signal which is sent by the first termination device on the one or more common optical waveguides to at least one of the two or more second termination devices before the downlink signal arrives at the wavelength multiplexer; guiding the downlink signal on a by-pass route in respect of the wavelength multiplexer and the switch, i.e. with the downlink signal avoiding running through the wavelength multiplexer and the switch; distributing, preferably by power splitting or wavelength routing, the downlink signal to the respective optical waveguide associated with the at least one of the two or more second termination devices; and multiplexing the downlink signal on the respective optical waveguide for transmission of the downlink signal to the at least one of the two or more second termination devices.

According to this embodiment, the aggregation device does not interfere with or preclude a transmission of downlink (= DL) signals. For the step of distributing the downlink signal to the respective optical waveguide, a DL distribution device may be added to the aggregation device. The DL distribution device may be, e.g., a WDM-based AWG or a power splitter, dependent on the applied DL technology, e.g. WDM, bit rate, etc.

Due to the asymmetric architecture of an optical communication network, i.e. one first transmission device downstream (= DS)-transmitting to multiple second transmission devices but one of the multiple second transmission devices upstream (= US) -transmitting only to the one first transmission device, whereby the multiplicity n of the second transmission devices reaches numbers in the range of n=64 or n=128, it is clear that a network provider in the first instance strives to achieve cost and energy improvements in the US transmission. Any improvement in the US transmission pays off n-fold. On the other hand the DS transmission is controlled by a single first transmission device. For a network provider it may be more reasonable to use conventional tools such as light source cooling or active signal amplification in order to achieve an acceptable reach in the DS direction than to resort to alternatives.

According to an embodiment of the invention, the method further comprises the steps of: downlink-routing, preferably time-dependently, of bulk data packets, e.g. video packets, which are sent by the first termination device on the one or more common optical waveguides to at least one of the two or more second termination devices; guiding the de-multiplexed bulk data packets to the wavelength multiplexer and the switch; routing the downlink bulk data packets, by means of the wavelength multiplexer and the switch, to the respective optical waveguide associated with the at least one of the two or more second termination devices; and multiplexing the downlink bulk data packets on the respective optical waveguide for transmission of the downlink bulk data packets to the at least one of the two or more second termination devices.

This way the introduction of optical switches allows to dynamically establish pseudo-broadcast paths to deliver bulk data packets with long bursts without suffering from power splitting signal level loss.

According to an embodiment of the invention, a blocking of the switch is avoided, preferably by time-division scheduling of upstream and bulk data downstream, or by employing wavelength-selective or semi-transparent mirrors.

According to an embodiment of the invention, the transmission of the uplink signals and the transmission of the downlink bulk data packets is time-scheduled in order to allow a bi-directional use of the switch without blocking the switch. Preferably, the uplink signals sent via the switch and the wavelength multiplexer are transmitted in TDM mode, i.e. the sending second termination devices take turns sending their signals only during granted time slots. According to this embodiment, the TDM mode has to be adjusted in order to leave time for a downstream transmission via the switch. Overlap can be achieved by adopting US transmission grants or by segmenting bulk data according to US grants. It is also possible to use semi-transparent mirrors to allow independent timeslots or to use wavelength selective mirrors with the same results.

Preferably, the switch control of switchable mirrors utilised in the switch has to be adjusted accordingly. By means of selective mirror engagement of the mirrors on a milli-second (= msec) time scale, a dynamic path switching may be achieved which leaves bandwidth for the US signals. The US scheduling may be adjusted to the DS bulk data transmission so that it allows for a complete switchover. Alternatively it is possible that semi-transparent mirrors are used which allow for a concurrent US and bulk DS transmission. It is also possibte that "quasi-transparent" mirrors are provided, namely realised by a low frequency switching in the kHz range, so that a blocking at the switch is resolved.

According to an embodiment of the invention, the step of switching, by the switch, further comprises switching two or more uplink signals with wavelengths associated with an identical wavelength channel port by means of one or more semi-transparent mirrors to the said identical wavelength channel port This may be advantageous if a λ drift of second signals received from a second termination device is not controlled by means of tuning but freely allowed. In case the drifting λ of the second signals matches a wavelength passband of the wavelength multiplexer which is already occupied by first signals falling into the same wavelength passband, it is possible to simply switch the drifting λ second signals into the already occupied wavelength passband. In a TDMA (= time division multiple access) mode any problem regarding a separation of the two different first and second signals from the double-used wavelength passband at a destination is avoided.

It is understood that the above mentioned step of by-passing the wavelength multiplexer and the switch whilst transmitting a first set of DL signals can be combined with the embodiment that a second set of DL signals, e.g. short bulk data packet, is dynamically distributed via the switch or the embodiment that two or more uplink signals with wavelengths associated with an identical wavelength channel port are switched by means of one or more semi-transparent mirrors to the said identical wavelength channel port.

According to an embodiment of the invention, the switch comprises a N-dimensional switch matrix. N can be any number, preferably N = 2, 3 or 4. However N is not limited to these preferred embodiments but the switch matrix may have any dimension N suitable for a certain application. Preferably, the switch matrix is a 2-dimensional array of MEMS based mirrors. The use of semi-transparent mirrors allows for concurrent US and bulk-DS signals through the switch and the wavelength multiplexer of the aggregation device at the cost of higher switch stage loss. Furthermore, the use of semi-transparent mirrors allows for a combination of two or more UL signals of the same λ from two or more different second terminal devices.

According to an embodiment of the invention, the wavelength multiplexer comprises an arrayed waveguide grating. Alternatives are cascades of thin-film filters, roughly one filter element per port (i.e. per passband channel). A disadvantage of a thin-film filter cascade in comparison to an AWG is that the attenuation increases with the number of ports. Therefore a thin-film filter cascade is not favourable in case of a high number of ports.

According to an embodiment of the invention, the aggregation device comprises a de-multiplexer adapted to de-multiplex a downlink signal, sent by the first termination device on the one or more common optical waveguides to at least one of the two or more second termination devices, from the one or more common optical waveguides before the downlink signal arrives at the wavelength multiplexer, a downlink distribution device adapted to distribute the downlink signal to the respective optical waveguide associated with the at least one of the two or more second termination devices, a waveguide which by-passes the wavelength multiplexer and the switch and which links the den-multiplexer and the downlink distribution device, and multiplexer devices adapted to multiplex the downlink signal on the respective optical waveguide for transmission of the downlink signal to the at least one of the two or more second termination devices. The step of distributing the downlink signal to the respective optical waveguide is preferably done by means of a wavelength-independent combiner or by a wavelength division multiplexer (WDM).

### Brief Description of the Fig urges

For a more complete understanding of the present invention and preferred embodiments of the invention, reference is made to the following description in connection with accompanying drawings in which:
- Fig. 1: shows a conventional optical access multipoint communication network;
- Fig. 2: shows an optical communication network according to an embodiment of the invention;
- Fig. 3: shows a first embodiment of an aggregation device;
- Fig. 4: shows a second embodiment of an aggregation device;
- Fig. 5: shows a third embodiment of an aggregation device; and
- Fig. 6: shows a fourth embodiment of an aggregation device.

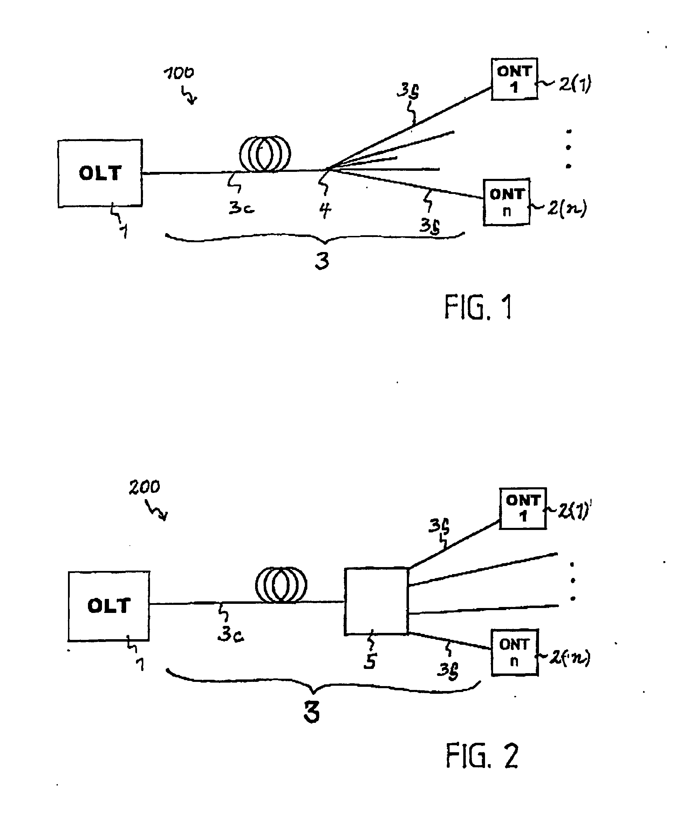

Fig. 1 shows a prior art optical communication network 100, e.g. a PON, comprising a first termination device 1, e.g. an OLT, and multiple second termination devices 2 (= 2(1), ..., 2(n)), e.g. ONTs or ONUs. In the sense of the invention, the term "multiple" denotes any natural number greater than one, i.e. n = 2, 3, 4, etc. The multiple second termination devices 2 are linked via an optical waveguide link 3, e.g. comprising one or more glass fibres of an ODN, to the first termination device 1. An optical link 3 between the first termination device 1 and one of the second termination devices 2 comprises a common section 3c comprising one or more common optical waveguides, a distribution point 4, and a separate section 3s associated with the respective second termination device 2. The multiple separate sections 3s of the respective second termination devices 2 meet at the distribution point 4.

A DL signal sent from the first termination device 1 to at least one of the multiple second termination devices 2 first travels on one of the one or more common optical waveguides of the common section 3c. At the distribution point 4, the DL signal is split into n copies, e.g. in one or more power splitting stages according to ITU-T G,98x. Then each copy of the DL signal further travels on one of the separate sections 3s to one of the multiple second termination devices 2. Due to the passive splitting, the power of the DL signal in one of the separate sections 3s is lower than the power of the DL signal in the common section 3c.

The higher the number of second termination devices 2, the higher the attenuation per OLT-ONU link. For example, in case of n=64 second termination devices 2, the DL signal will be split into n=64 copies. Consequently, the attenuation per OLT-ONU link is ca. 20 dB, due to the power splitting alone. The same ratio of power levels between the common section 3c and the separate sections 3s is valid for an UL signal sent from one of the multiple second termination devices 2 to the first termination device 1. This high signal power attenuation significantly limits the reach and the data rates of the optical communication network 100.

### Description of Embodiments

Fig. 2 shows an optical communication network 200 according to an embodiment of the invention. The optical communication network 200 preferably is a passive network. The optical communication network 200 may be used for a transmission of data signals of Ethernet, telephony, Internet, streaming audio, and streaming video. Regarding the first termination device 1, e.g. an OLT, and the multiple second termination devices 2 (= 2(1), ..., 2(n)), e.g. ONTs or ONUs, the optical communication network 200 is similar to the above described prior art optical communication network 100. Also each of the multiple second termination devices 2 is linked via an optical waveguide link 3, e.g. comprising one or more glass fibres, to the first termination device 1. Also the optical link 3 between the first termination device 1 and one of the second termination devices 2 comprises a common section 3c and a separate section 3s. However the distribution point 4 of the above described prior art optical communication network 100 has been replaced by an aggregation device 5, a so-called λ-router. This replacement leads to a significant reduction of signal attenuation compared to the power splitting described in connection with Fig. 1. For example, in case of n=64 second termination devices 2, the attenuation per OLT-ONU link according to an embodiment of the invention is less than 8 dB.

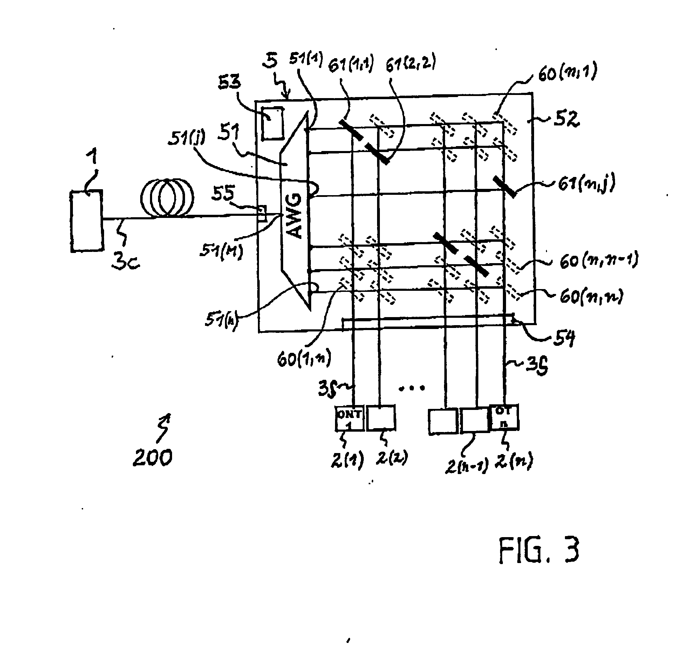

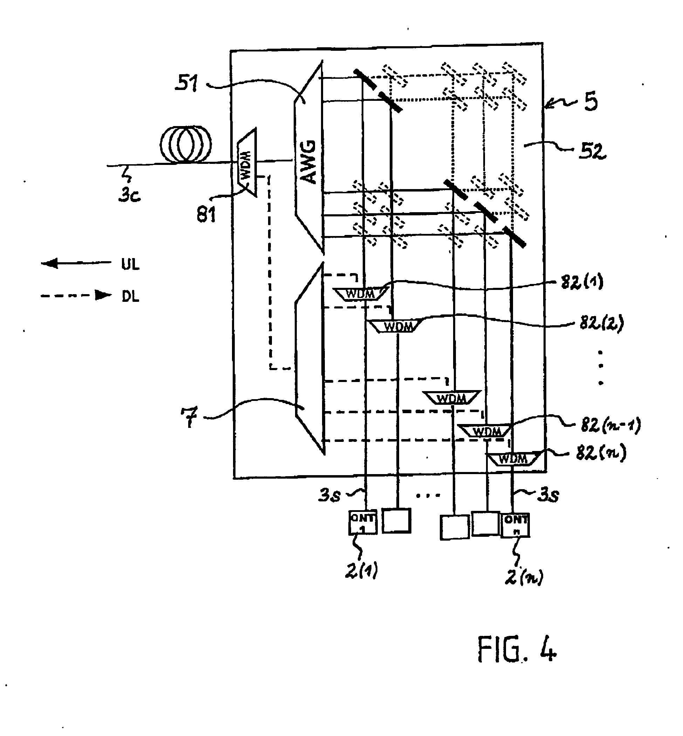

Fig. 3 shows a first embodiment of the aggregation device 5 of Fig. 2, the aggregation device 5 comprising a wavelength multiplexer 51, a switch 52, a control unit 53, a first interface 55, and a second interface 54. In favour of clarity the first and second interfaces 54, 55 of the aggregation device 5 have been dispensed with in Figs. 4 to 6.

The control unit 53 is adapted to control the function of the aggregation device 5, in particular the functions of the wavelength multiplexer 51 and the switch 52. The control unit 53 may be composed of one or several inter-linked computers, i.e., a hardware platform, a software platform basing on the hardware platform and several application programs executed by the system platform formed by the software and hardware platform. The functionality of the aggregation device 5 are provided by the execution of these application programs. The application programs or a selected part of these application programs constitute a computer software product providing a wavelength dependent routing service as described in the following, when executed on the system platform. Further, such computer software product is constituted by a storage medium storing these application programs or said selected part of application programs.

Even if the control unit 53 is not explicitly mentioned in the following description and drawings, it is understood that the function of the aggregation device 5 may be controlled by a control unit. Control can also be performed by the OLT via remote control, i.e. the control unit 53 may be integrated in the OLT.

The second interface 54 receives uplink signals, which are sent by transmitters of the two or more second termination devices 2 via a respective separate section 3s of the optical waveguide link to the first termination device 1, and sends the received uplink signals to the switch 52, That means that the switch 52 has at least one input port for each of the n second termination devices 2. In the example of Fig. 3, the switch 52 is in the form of a 2-dimensional optical MEMS switch comprising an n x n array of MEMS based mirrors 6. The wavelength multiplexer 51 multiplexes n signals provided in n different wavelengths bands. The wavelength multiplexer 51 is a wavelength multiplexer/de-multiplexer which multiplexes or de-multiplexes light with different wavelengths. The wavelength multiplexer 51 may be of a dielectrics multilayer filter type, fibre grating type or array waveguide diffraction grating type, i.e. an AWG. In the example of Fig. 3, the wavelength multiplexer 51 comprises n different wavelength channel ports 51 (j), with j = 1, ..., n. Each wavelength channel port is associated a corresponding wavelength channel, i.e. a corresponding wavelength passband,

A MEMS mirror 6 is either not engaged 60 (shown in Fig. 3 as a dashed frame), i.e. not reflecting incident light, or engaged 61 (shown in Fig. 3 as a black filled frame), i.e. reflecting incident light The engagement status of the mirrors 6 determines to which wavelength channel port 51 (j) of the wavelength multiplexer 51 the signals sent by the n second termination devices 2 are routed to. The position of a mirror 6 is identified by a number pair (i, j) with i, j = 1, ..., n. The first number "i" of the number pair (i, j) indicates the association of a mirror 6 with the i-th second termination device 2(i), The second number "j" of the number pair (i, j) indicates the association of a mirror 6 with the j-th wavelength channel port 51 (j) of the wavelength multiplexer 51. The engagement of a mirror 6(i, j) is denoted by the number "0" for "not engaged" and the number "1" for "engaged". Thus, the complete reference sign 60(2, 4) indicates that the mirror 6 is associated both with the second termination device 2(2) and the wavelength channel port 51 (4) of the wavelength multiplexer 51.

For simplicity let us assume that the central wavelengths associated with the j different wavelength channel ports 51 (j) of the wavelength multiplexer 51 increase with j. That means that a central wavelength associated with a (j+1)-th wavelength channel port 51(j+1) is larger than a central wavelength associated with a j-th wavelength channel port 51 (j). Usually a temperature increase of a semiconductor laser results in a red shift of the emitted light, i.e. the photon energy of the laser light decreases as its wavelength increases. It is possible that the light signals sent by one 2(i) of the second termination devices 2 are generated by a semiconductor laser serving as light source of this termination device 2(i). If due to a ambient temperature drift the wavelength of the emitted laser light continuously increases, its central wavelength may at a certain point in time not match the first wavelength channel of the wavelength multiplexer 51 any more. This A drift is detected by a sensor associated with the wavelength multiplexer 51 or in the OLT. If the A drift exceeds a pre-defined threshold, the sensor triggers that the mirror 61 (i, j) which up to this time has been engaged to couple the light of the i-th termination device 2(i) to the j-th wavelength channel port 51 (j) is de-engaged and that at the same time another mirror 61(i, j+1) is engaged to couple the light of the i-th termination device 2(i) to the (j+1)-th wavelength channel port 51(j+1).

Preferably, transmitter wavelengths of the second termination devices 2 obey a certain natural wavelength distribution. In order to match the wavelength passbands of the multiplexer 51, there may be an individual A fine tuning, e.g. by laser chip heating.

Fig. 3 shows that all engaged mirrors 61(1,1), 61(2,2),..., 61(n-2,n-2), 61(n-1,n-1) but one lie on the diagonal from (1,1) to (n,n) of the n x n mirror array. The light reflected by the single exceptional engaged mirror 61 (n,j) not lying on the diagonal has a wavelength which does not match the wavelength passband of the wavelength channel port 51 (n). Because of this, this light of the n-th termination device 2(n) is coupled to a different wavelength channel port 51(j) whose wavelength passband comprises the wavelength of the light emitted by the n-th termination device 2(n). This λ drift may be caused by a temperature shift or a different condition leading to a λ drift. All the mirrors located at the remaining positions (i,j) are not engaged.

The wavelength multiplexer 51 combines the n UL signals received via the n wavelength channel ports to one or more multiplexed UL signals. After completing the multiplexing, the wavelength multiplexer 51 sends the resulting one or more multiplexed signals from a multiplexed port 51 (M) of the wavelength multiplexer 51 to the first interface 55. The first interface 55 sends the multiplexed uplink signal on the one or more common optical waveguides 3c to the first termination device (not shown).

In summary the aggregation device 5 represents a λ-router in UL direction. For example, in case of n=64 second termination devices 2, the expected insertion loss per OLT-ONU link can be estimated as follows: the multiplexer 51 has an attenuation of < 6 dB (current specification of a typical AWG as available from JDS Uniphase Corporation, Milpitas/USA: 40 channels, 100 GHz: < 2.5 dB, Gaussian type); the optical switch 52 has an attenuation of < 2 dB. This gives an overall insertion loss of < 8 dB.

Fig. 4 shows a second embodiment of the aggregation device 5 of Fig. 2 whereby the aggregation device 5 is designed to be a λ-router for adaptive UL and broadcast DL. Regarding the UL signal transmission (solid lines between a WDM pair), reference is made to Fig. 3. Regarding the DL signal transmission (dashed lines between a WDM pair), a DL distribution device 7 is added to the aggregation device 5, which is, e.g., an AWG or a power splitter, dependent of applied DL technology, e,g. WDM, bit rate, etc. The DL distribution device 7 provides that DS signals originating from the first termination device are distributed to the multiple second termination devices 2, either in a point-to-multipoint method, e.g. by power splitting, or in a point-to-point method, e.g. by WDM.

Further, a first WDM device 81 is inserted between the common section 3c of the optical waveguide link 3 and the wavelength multiplexer 51 and the DL distribution device 7, respectively. The first WDM device 81 provides the multiplexing for the US signals, e.g. at a waveband of 1310 ± 20 nm, and the DS signals, e.g. at a waveband of 1490 ±10 nm, so that they can be transmitted in parallel over the common section 3c of the optical waveguide link 3 between the aggregation device 5 and the first termination device (not shown).

Moreover, n second WDM devices 82(1), ..., 82(n) have been provided which multiplex the US signals and the DS signals so that they can be transmitted in parallel over the separate sections 3s of the optical waveguide link 3 between the aggregation device 5 and the respective second termination devices 2.

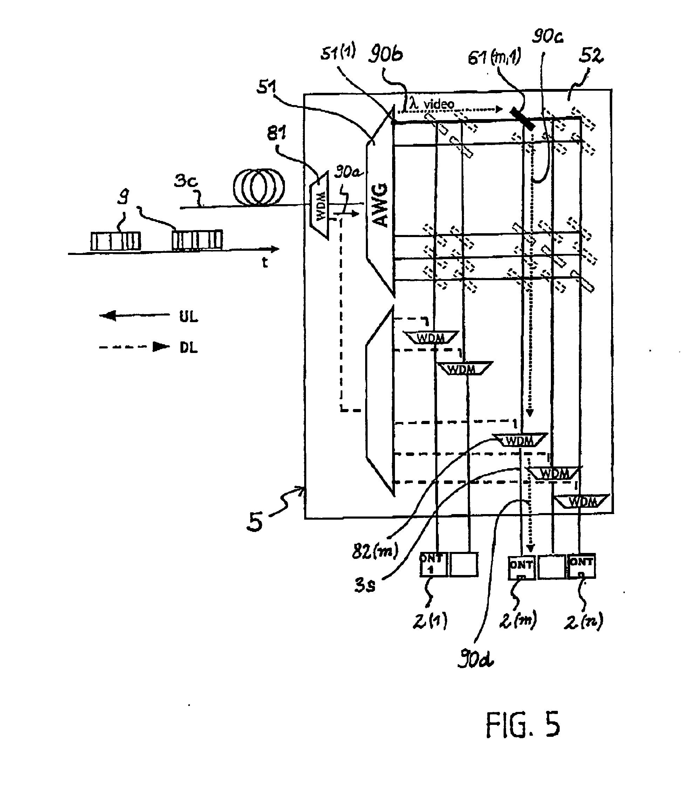

Fig. 5 shows a third embodiment of the aggregation device 5 of Fig. 2 whereby the aggregation device 5 is designed to provide a dynamic distribution of short bulk data packets 9, e.g. video packets. Regarding the UL signal transmission (solid lines between a WDM pair), and the DL signal transmission (dashed lines between a WDM pair), reference is made to Fig. 4.

For a DS transmission of bulk data packets 9 destined for the m-th second termination device 2(m), use is made of UL equipment of the aggregation device 5, namely the wavelength multiplexer 51 and the switch 52. The bulk data packets 9, e.g. related to a TV-on-demand service made use of by the m-th second termination device 2(m), have a length in the multi-milli-second range and are allocated at a second wavelength in the DL band in addition to a first DL band wavelength used for the DL signal transmission served via the DL distribution device 7. The bulk data packets 9 are transmitted from the first termination device via the common section 3c of the optical waveguide link 3 to the first WDM device 81 where the bulk data stream 9 is routed 90a, based on its wavelength, to the wavelength multiplexer 51. An independent fibre route is also possible.

Due to the fact that the first WDM device 81 has to handle three different wavelengths, the first WDM device 81 preferably is a three window WDM splitter; however, this is not necessary, as bulk and regular UL can be in the same window.

The wavelength multiplexer 51 routes 90b the bulk data stream 9, based on its wavelength, to the first wavelength channel port 51 (1) of the wavelength multiplexer 51. From there the engaged mirror 61 (m,1) switches 90c the bulk data stream 9 to the m-th second WDM device 82(m) assigned to the m-th second termination device 2(m). From m-th second WDM device 82(m), the bulk data stream 9 is transmitted 90d via the separate section 3s to the m-th second WDM device 82(m).

By means of selective (out of phase, i.e. anti-phase switching is assumed now) mirror engagement of the mirror 6(m,1) on a milli-second time scale, a dynamic path switching may be achieved which leaves bandwidth for the US signals. The US scheduling may be adjusted to the DS bulk data transmission intervals so that it allows for a complete switchover. Alternatively it is possible that a semi-transparent mirror 6(m,1) is used which allows for a concurrent US and bulk data DS transmission. It is also possible that "quasi-transparent" mirrors are provided, namely realised by a low frequency switching in the kHz range, so that a blocking at the switch 52 is reversed. It is to be noticed that in Fig. 5 a not engaged mirror is shown as a dashed frame, an engaged, "semi-transparent" or wavelength selective mirror is shown as a dotted frame, and an engaged mirror used for a distribution of short bulk data packets 9 is shown as a black filled frame.

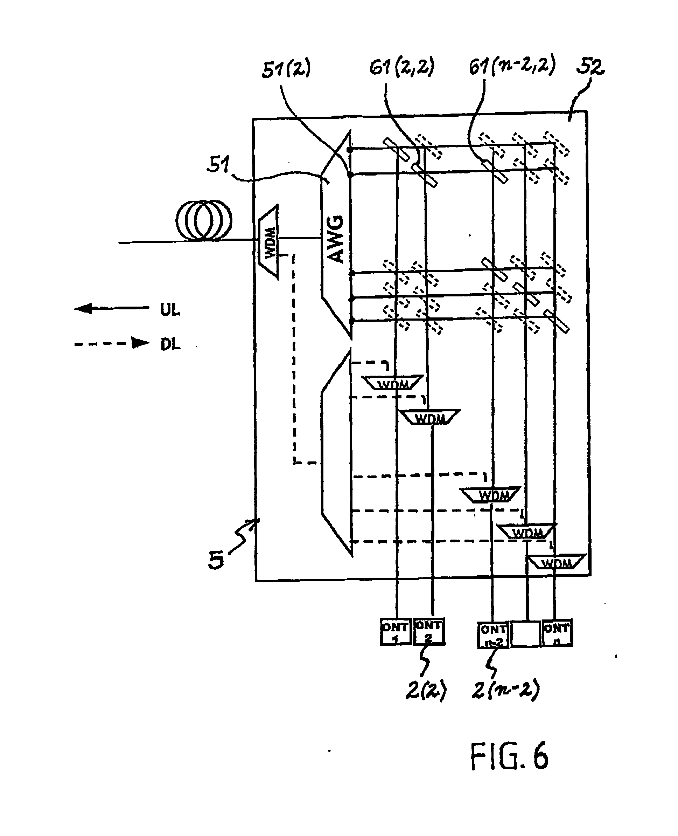

Fig. 6 shows a fourth embodiment of the aggregation device 5 of Fig. 2 whereby the aggregation device 5 is designed to provide a dynamic combiner of multiple signals per wavelength channels, e.g. TDMA signals. Regarding the UL signal transmission (solid lines between a WDM pair), and the DL signal transmission (dashed lines between a WDM pair), reference is made to Fig. 4.

According to this fourth embodiment of the aggregation device 5, use is made of semi-transparent mirrors inside the switch 52. It is to be noticed that in Fig. 6 a not engaged mirror is shown as a dashed frame, and an engaged mirror is shown as a solid frame. As exemplarily shown in Fig. 6 this makes it possible that two UL signals of the same wavelength channel from two different second termination devices 2(2) and 2(n-2) are (power-) combined, by means of the semi-transparent engaged mirrors 61(2,2) and 61 (n-2,2), into the same wavelength channel port 51 (2) of the wavelength multiplexer 51.

This may be advantageous if a λ drift of second signals received from a second termination device 2(i), e.g. the second termination device 2(n-2), is not controlled by means of tuning but freely allowed. In case the drifting λ of the second signals matches a wavelength channel band of the wavelength multiplexer 51 which is already occupied by first signals falling into the same wavelength channel band, it is possible to simply switch the drifting A second signals into the already occupied wavelength channel band. By using time multiplex (TDMA) this does not pose a problem regarding a separation of the two different first and second signals from the double-used wavelength channel at the destination, i.e. the first termination device.

Thus, a combination of multiple signals from two different second termination devices is made possible by switching similar allocated wavelengths from two different second termination devices by means of semi-transparent mirrors. This leads to an additional loss in the routing path, e.g. 6 dB when only two wavelengths of second termination devices are permitted.

## Claims

1. A method of transmitting signals in an optical communication network (200) with a first termination device (1) and two or more second termination devices (2(i)) linked to the first termination device (1), the method comprising the step of:
sending, by transmitters of the two or more second termination devices (2(i)), uplink signals on respective optical waveguides (3s) associated with the two or more second termination devices (2(i)) to the first termination device (1);
**characterised by**
receiving, by a switch (52), the uplink signals and switching, dependent on wavelengths of the uplink signals, the uplink signals to corresponding wavelength channel ports (51(j)) of a wavelength multiplexer (51), wherein, if a wavelength drift is detected by a sensor associated with wavelength multiplexer (51) or in the first termination device (1), and if the wavelength drift exceeds this time has been engaged to couple an uplink signal of one of the two or more second termination devices (2(i)) to a first wavelength channel port (51(j)) is de-engaged and that at the same time another mirror 61 (i, j+1)) is engaged to couple the uplink signal of the one of the two or more second termination devices (2(i)) to a second wavelength channel port (51(j+1)) ;
combining, by the wavelength multiplexer (51), the received uplink signals to a multiplexed uplink signal; and
sending the multiplexed signal from a multiplexed port (51(M)) of the wavelength multiplexer (51) on one or more common optical waveguides (3c) to the first termination device (1).

2. The method according to claim 1,
**characterised in**
**that** the method further comprises the step of:
tuning a wavelength of at least one of the transmitters.

3. The method according to claim 1,
**characterised in**
**that** the method further comprises the steps of:
de-multiplexing a downlink signal, sent by the first termination device (1) on the one or more common optical waveguides (3c) to at least one of the two or more second termination devices (2(i)), from the one or more common optical waveguides (3c) before the downlink signal reaches the wavelength multiplexer (51);
guiding the downlink signal on a by-pass in respect of the wavelength multiplexer (51) and the switch (52);
distributing, preferably by power splitting or Wavelength Division Multiplexing, the downlink signal to the respective optical waveguide (3s) associated with the at least one of the two or more second termination devices (2(i)); and
multiplexing the downlink signal on the respective optical waveguide (3s) for transmission of the downlink signal to the at least one of the two or more second termination devices (2(i)).

4. The method according to claim 1,
**characterised in**
**that** the method further comprises the steps of:
routing downlink bulk data packets, sent by the first termination device (1) on the one or more common optical waveguides (3c) to at least one of the two or more second termination devices (2(i));
guiding the downlink bulk data packets to the wavelength multiplexer (51) and the switch (52);
routing the downlink bulk data packets, by means of the wavelength multiplexer (51) and the switch (52), to the respective optical waveguide (3s) associated with the at least one of the two or more second termination devices (2(i)); and
multiplexing the downlink bulk data packets on the respective optical waveguide (3s) for transmission of the downlink bulk data packets to the at least one of the two or more second termination devices (2(i)).

5. The method according to claim 4,
**characterised in**
**that** the method further comprises the step of:
avoiding switch blocking preferably by time-division scheduling of upstream and bulk data downstream or by employing wavelength selective or semi-transparent mirrors.

6. The method according to claim 1,
**characterised in**
**that** the step of switching, by the switch (52), further comprises:
switching two or more uplink signals with wavelengths associated with an identical wavelength channel port (51 (j)) by means of one or more semi-transparent mirrors (61(i,j)) to the said identical wavelength channel port (51 (j)).

7. An aggregation device (5) comprising a switch (52), a wavelength multiplexer (51) with a multitude of wavelength ports (51 (j)), and first and second interfaces (54, 55), whereby the second interface (54) is adapted to receive uplink signals sent by transmitters of two or more second termination devices (2(i)) of an optical communication network (200) on respective optical waveguides (3s) to a first termination device (1) of the optical communication network (200), **characterised in that** the switch (52) is adapted to switch, dependent on wavelengths of the received uplink signals, the received uplink signals to corresponding wavelength ports (51(j)) of the multitude of wavelength ports (51(j)), wherein, if a wavelength drift is detected by a sensor associated with wavelength multiplexer (51) or in the first termination device (1), and if the wavelength drift exceeds a pre-defined threshold, the sensor triggers that a mirror (61(i, j)) which up to this time has been engaged to couple an uplink signal of one of the two or more second termination devices (2(i)) to a first wavelength channel port (51(j)) is de-engaged and that at the same time another mirror 61 (i, j+1)) is engaged to couple the uplink signal of the one of the two or more second termination devices (2(i)) to a second wavelength channel port (51(j+1)), the wavelength multiplexer (51) is adapted to combine the received uplink signals to a multiplexed uplink signal, and the first interface (55) is adapted to send the multiplexed uplink signal on one or more common optical waveguides (3c) to the first termination device (1).

8. The aggregation device (5) according to claim 7,
**characterised in**
**that** the switch (52) comprises a N-dimensional switch matrix, preferably N being 2, 3, or 4.

9. The aggregation device (5) according to claim 8,
**characterised in**
**that** the switch matrix is a 2-dimensional array of MEMS based mirrors (61(i,j)).

10. The aggregation device (5) according to claim 9,
**characterised in**
**that** at least one of the mirrors, preferably all mirrors, is semi-transparent.

11. The aggregation device (5) according to claim 7,
**characterised in**
**that** the wavelength multiplexer (51) comprises an arrayed waveguide grating.

12. The aggregation device (5) according to claim 7,
**characterised in**
**that** the aggregation device (5) comprises a de-multiplexer (81) adapted to de-multiplex a downlink signal, sent by the first termination device (1) on the one or more common optical waveguides (3c) to at least one of the two or more second termination devices (2(i)), from the one or more common optical waveguides (3c) before the downlink signal arrives at the wavelength multiplexer (51), a downlink distribution device (7) adapted to distribute, preferably by power splitting or Wavelength Division Multiplexing, the downlink signal to the respective optical waveguide (3s) associated with the at least one of the two or more second termination devices (2(i)), a waveguide which by-passes the wavelength multiplexer (51) and the switch (52) and links the de-multiplexer (81) and the downlink distribution device (7), and multiplexer devices (82) adapted to multiplex the downlink signal on the respective optical waveguide (3s) for transmission of the downlink signal to the at least one of the two or more second termination devices (2(i)).

13. An optical communication network (200) comprising a first termination device 13. An optical communication network (200) comprising a first termination device (1) adapted to receive a multiplexed uplink signal comprising two or more uplink signals via one or more common optical waveguides (3c), two or more second termination devices (2(i)) linked to the first termination device (1) via an optical waveguide link (3) comprising one or more of the one or more common optical waveguides (3c) and respective optical waveguides (3s) associated with the two or more second termination devises (2(i)) and adapted to transmit the two or more uplink signals on the respective optical waveguides (3s) associated with the two or more second termination devices (2(i)) of the optical waveguide link (3) to the first termination device (1), and an aggregation device (5) comprising a switch (52), a wavelength multiplexer (51) with a multitude of wavelength ports (51(j)), and first and second interfaces (54, 55), whereby the second interface (54) is adapted to receive the uplink signals sent by transmitters of the two or more second termination devices (2(i)) of the optical communication network (200) on the respective optical waveguides (3s) to the first termination device (1) of the optical communication network (200), **characterised in that** the switch (52) is adapted to switch, dependent on wavelengths of the received uplink signals, the received uplink signals to corresponding wavelength ports (51 (j)) of the multitude of wavelength ports (51(j)), wherein, if a wavelength drift is detected by a sensor see claim 1 and if the wavelength drift exceeds a pre-defined threshold, the sensor triggers that a mirror (61 (i, j)) which up to this time has been engaged to couple an uplink signal of one of the two or more second termination devices (2(i)) to a first wayelength channel port (51 (j)) is de-engaged and that at the same time another mirror 61 (i, j+1)) is engaged to couple the uplink signal of the one of the two or more second termination devices (2(i)) to a second wavelength channel port (51 (j+1)), the wavelength multiplexer (51) is adapted to combine the received uplink signals to the multiplexed uplink signal, and the first interface (55) is adapted to send the multiplexed uplink signal on one or more of the one or more common optical waveguides (3c) to the first termination device (1).

## Patentansprüche

1. Verfahren zur Übertragung von Signalen in einem optischen Kommunikatlonsnetzwerk (200) mit einer ersten Abschlussvorrichtung (1) und zwei oder mehr zweiten Abschlussvorrichtungen (2(i)), welche mit der ersten Abschlussvorrichtung (1) verbunden sind, wobei das Verfahren den folgenden Schritt umfasst:
Senden, durch die Sender der zwei oder mehr zweiten Abschlussvorrichtungen (2(i)), von Uplink-Signalen auf jeweiligen optischen Wellenieitern (3s), die mit den zwei oder mehr zweiten Abschlussvorrichtungen (2(i)) assoziiert sind, an die erste Abschlunsvorrichtung (1);
**gekennzeichnet durch**
den Empfang, an einem Schalter (52), der Uplink-Signale und Schalten, in Abhängigkeit von den Wellenlängen der Uplink-Signale, der Uplink-Signale an entsprechende Wellenlängenkanal-Ports (51(j)) eines Wellenlängenmultiplexers (51), wobei, wenn eine Wellenlängen-Drift von einem Sensor, der mit dem Wellenlängenmultiplexer (51) assoziiert oder in der ersten Abschlussvorrichtung (1) angeordnet ist, erkannt wird, und wenn die Wellenlängen-Drift einen vordefinierten Grenzwert überschreitet, der Sensor auslöst, dass ein Spiegel (61(i, j)), welcher bis zu diesem Zeitpunkt eingesetzt wurde, um ein Uplink-Signal einer der zwei oder mehr zweiten Abschlussvorrichtungen (2(i)) an einen ersten Wellenlängenkanal-Port (51 (j)) zu koppeln, außer Betrieb gesetzt wird, und dass gleichzeitig ein anderer Spiegel (61(i, j+1)) eingesetzt wird, um das Uplink-Signal der einen der zwei oder mehr zweiten Abschlussvorrichtungen (2(i)) an einen zweiten Wellenlangenkanal-Port (51(j+1)) zu koppeln;
das Kombinieren, **durch** den Wellenlängenmultiplexer (51), der empfangenen Uplink-Signale mit einem gemultiplexten Uplink-Signal; und
das Senden des gemultiplexten Signals von einem gemultiplexten Port (51 (M)) des Wellenlängenmultiplexers (51) auf einem oder mehreren gemeinsamen optischen Wellenieltern (3c) an die erste Abschlussvorrichtung (1).

2. Verfahren nach Anspruch 1,
**dadurch gekennzeichnet,**
**dass** das Verfahren weiterhin den folgenden Schritt umfasst:
Abstimmen einer Wellenlänge mindestens eines der Sender.

3. Verfahren nach Anspruch 1,
**dadurch gekennzeichnet,**
**dass** das Verfahren weiterhin die folgenden Schritte umfasst:
Demultiplexen eines von der ersten Abschlussvorrlchtung (1) auf dem einen oder mehreren gemeinsamen optischen Wellenleitern (3c) an mindestens eine der zwei oder mehr zweiten Abschlussvorrichtung (2(i)) gesendeten Downlink-Signals aus dem einen oder den mehreren gemeinsamen optischen Wellenleitern (3c), bevor das Downlink-Signal den Wellenlängenmultiplexer (51) erreicht;
Leiten des Downlink-Signals auf einem By-Pass in Bezug auf den Wellenlängenmultiplexer (51) und den Schalter (52);
Verteilen, vorzugsweise durch Leistungsverzweigung oder Wollenlängenmultiplex, des Downlink-Signals an den jeweiligen mit der mindestens einen der zwei oder mehr zweiten Abschlussvorrichtungen (2(i)) assoziierten optischen Wellenleiter (3s); und
Multiplexen des Downlink-Signals auf dem jeweiligen optischen Wellenleiter (3s) für die Übertragung des Downlink-Signals an die mindestens eine der zwei oder mehr zweiten Abschlussvorrichtungen (2(i)).

4. Verfahren nach Anspruch 1,
**dadurch gekennzeichnet,**
**dass** das Verfahren weiterhin die folgenden Schritte umfasst:
Routen der von der ersten Abschlussvorrichtung (1) gesendeten Downlink-Massendatenpakete auf dem einen oder mehreren gemeinsamen optischen Wellenleitern (3c) an mindestens eine der zwei oder mehr zweiten Abschlussvorrichtungen (2(i));
Leiten der Downlink-Massendatenpakete an den Wellenlängenmultiplexer (51) und den Schalter (52);
Routen der Downlink-Massendatenpakete, anhand des Wellenlängenmultiplexers (51) und des Schalters (52), an den jeweiligen mit der mindestens einen der zwei oder mehr zweiten Abschlussvorrichtungen (2(i)) assoziierten optischen Wellenleiter (3s); und
Multiplexen der Downlink-Massendatenpakete auf dem jeweiligen optischen Wellenleiter (3s) für die Übertragung der Downlink-Massendatenpakete an die mindestens eine der zwei oder mehr Abschlussvorrichtungen (2(i)).

5. Verfahren nach Anspruch 4,
**dadurch gekennzeichnet,**
**dass** das Verfahren weiterhin den folgenden Schritt umfasst:
Verhindern der Schalterblockierung, vorzugsweise durch Zeitmultiplex-Planung von Upstream- und Massendaten Downstream oder durch Verwenden von wellenlängenselektiven oder halbtransparenten Spiegeln.

6. Verfahren nach Anspruch 1,
**dadurch gekennzeichnet,**
**dass** der Schritt des Schaltens, durch den Schalter (52), weiterhin umfasst:
Schalten von zwei oder mehr Uplink-Signalen mit Wellenlängen, welche mit einem identischen Wellenlängenkanal-Port (51 (j)) assozllert sind, anhand eines oder mehrerer halbtransparenter Spiegel (61 (i,j)) an den besagten Identischen Wellenlängenkanal-Port (51(j)).

7. Aggregationseinrichtung (5) mit einem Schalter (52), einem Wellenlängenmultiplexer mit einer Vielzahl von Welienlängen-Ports (51 (j)), und einer ersten und einer zweiten Schnittstelle (54, 55), wobei die zweite Schnittstelle (54) für den Empfang der von Sendern von zwei oder mehr zweiten Abschlussvorrichtungen (2(i)) eines optischen Kornmunikationsnetzwerks (200) auf jeweiligen optischen Wellenleitern (3s) an eine erste Abschlussvorrichtung (1) des optischen Kommunikationsnetzwerks (200) gesendeten Uplink-Signale ausgelegt ist, **dadurch gekennzeichnet, dass** der Schalter (52) dazu ausgelegt ist, die empfangenen Uplink-Signale in Abhängigkeit von den Wellenlängen der empfangenen Uplink-Signale an entsprechende Wellenlängen-Ports (51 (j)) der Vielzahl von Wellenlängen-Ports (51 (j)) zu schalten, wobei, wenn eine Wellenlängen-Drift von einem Sensor, der mit dem Wellenlängenmultiplexer (51) assoziiert oder in der ersten Abschlussvorrichtung (1) angeordnet ist, erkannt wird, und wenn die Weilenlängen-Drift einen vordefinierten Grenzwert überschreitet, der Sensor auslöst, dass ein Spiegel (61 (i, j)), welcher bis zu diesem Zeitpunkt eingesetzt wurde, um ein Uplink-Signal einer der zwei oder mehr zweiten Abschlussvorrichtungen (2(i)) an einen ersten Wellenlängenkenal-Port (51(j)) zu koppeln, außer Betrieb gesetzt wird, und dass gleichzeitig ein anderer Spiegel (61(i, j+1)) eingesetzt wird, um das Uplink-Signal der einen der zwei oder mehr zweiten Abschlussvorrichtungen (2(i)) an einen zweiten Wellenlängenkanal-Port (51(j+1)) zu koppeln, wobei der Wollenlängenmultiplexer (51) dazu ausgelegt ist, die empfangenen Uplink-Signale mit einem gemultiplexten Uplink-Signal zu kombinieren, und wobei die erste Schnittstelle (55) dazu ausgelegt ist, das wellenlängengemultiplexte Uplink-Signal auf einem oder mehreren gemeinsamen optischen Wellenlängenleitern (3c) an die erste Abschlussvorrichtung (1) zu senden.

8. Aggregationseinrichtung (5) nach Anspruch 7,
**dadurch gekennzeichnet,**
**dass** der Schalter (52) eine N-dimensionale Schaltmatrix umfasst, wobei N vorzugsweise 2, 3 oder 4 beträgt.

9. Aggregationseinrichtung (5) nach Anspruch 8,
**dadurch gekennzeichnet,**
**dass** die Schaltmatrix eine 2-dimensionale Anordnung von MEMS-basierten Spiegeln (61(i, j)) Ist.

10. Aggregationseinrichtung (5) nach Anspruch 9,
**dadurch gekennzeichnet,**
**dass** mindestens einer der Spiegel, vorzugsweise alle Spiegel, halbtransparent ist/sind.

11. Aggregationseinrichtung (5) nach Anspruch 7,
**dadurch gekennzeichnet,**
**dass** der Wellenlängenmultlplexer (51) ein Wellenleitergitter in Array-Form umfasst.

12. Aggregationseinrichtung (5) nach Anspruch 7,
**dadurch gekennzeichnet,**
**dass** die Aggregationseinrichtung (5) einen Demultlplexer (81), welcher dazu ausgelegt ist, ein von der ersten Abschlussvorrichtung (1) auf dem einen oder mehreren gemeinsamen optischen Wellenleitern (3c) an mindestens eine der zwei oder mehr zweiten Abschlussvorrichtungen (2(i)) gesendetes Downlink-Signal aus dem einen oder mehreren gemeinsamen optischen Wellenleitern (3c) zu demultiplexen, bevor das Downlink-Signal an dem Wellenlängenmultiplexer (51) ankommt, eine Downlink-Verteilereinrichtung (7), welche dazu ausgelegt Ist, das Downlink-Signal, vorzugsweise durch Leistungsverzweigung oder Wellenlängenmultiplex, an den jeweiligen mit der mindestens einen der zwei oder mehr zweiten Abschlussvorrichtungen (2(i)) assoziierten optischen Wellenleiter (3s) zu verteilen, einen Wellenleiter, welcher den Wellenlängenmultiplexer (51) und den Schalter (52) umgeht und den Demultiplexer (81) und die Downlink-Vertellereinrichtung verbindet, und Multiplexereinrichtungen (82), weiche dazu ausgelegt sind, das Downlink-Signal auf dem jeweiligen optischen Wellenleiter (3s) für die Übertragung des Downlink-Signals an die mindestens eine der zwei oder mehr zweiten Abschlussvorrichtungen (2(i)) zu multiplexen, umfasst.

13. Optisches Kommunikationsnetzwerk (200) mit einer ersten Abachlussvorrichtung (1), welche für den Empfang eines gemultiplexten Uplink-Signals mit zwei oder mehr Uplink-Signalen über einen oder mehrere gemeinsame optische Wellenleiter (3c) ausgelegt ist, zwei oder mehr zweiten Abschlussvorrichtungen (2(i)), welche über eine optische Wellenleiterverbindung (3) mit einem oder mehreren des einen oder der mehreren gemeinsamen optischen Wellenlelter (3c) mit der ersten Abschlussvorrichtung (1) verbunden sind, und jeweiligen optischen Wellenleitern (3s), welche mit den zwei oder mehr zweiten Abschlussvorrichtungen (2(i)) assoziiert und dazu ausgelegt sind, die zwei oder mehr Uplink-Signale auf den jeweiligen mit den zwei oder mehr zweiten Abschlussvorrichtungen (2(i)) der optischen Wellenleiterverbindung (3) assoziierten optischen Wellenleitern (3s) an die erste Abschlussvorrichtung (1) zu übertragen, und einer Aggregationseinrichtung (5) mit einem Schalter (52), einem Wellenlängenmultiplexer (51) mit einer Vielzahl von Wellenlängen-Ports (51(j)), und einer ersten und einer zweiten Schnittstelle (54, 55), wobei die zweite Schnittstelle (54) dazu ausgelegt Ist, die von den Sendern der zwei oder mehr zweiten Abschlussvorrichtungen (2(i)) des optischen Kommunikationsnetzwerks (200) auf den jeweiligen optischen Wellenleitern (3s) an die erste Abschlussvorrichtung (1) des optischen Kommunikationsnetzwerks (200) gesendeten Uplink-Signale zu empfangen, **dadurch gekennzeichnet, dass** der Schalter (52) dazu ausgelegt ist, die empfangenen Uplink-Signale in Abhängigkeit von den Wellenlängen der empfangenen Uplink-Signale an entsprechende Wellenlängen-Ports (51 (j)) der Vielzahl von Wellenlängen-Ports (51 (j)) zu schalten, wobei, wenn eine Wellenlängen-Drift von einem Sensor, der mit dem Wellenlängenmultiplexer (51) assoziiert oder in der ersten Abschlussvorrichtung (1) angeordnet Ist, erkannt wird, und wenn die Wellenlängen-Drift einen vordefinierten Grenzwert überschreitet, der Sensor auslöst, dass ein Spiegel (61(i, j)), welcher bis zu diesem Zeitpunkt eingesetzt wurde, um ein Uplink-Signal einer der zwei oder mehr zweiten Abschlussvorrichtungen (2(i)) an einen ersten Wellenlängenkanal-Port (51 (j)) zu koppeln, außer Betrieb gesetzt wird, und dass gleichzeitig ein anderer Spiegel (61 (i, j+1)) eingesetzt wird, um das Uplink-Signal der einen der zwei oder mehr zweiten Abschlussvorrichtungen (2(i)) an einen zweiten Wellenlängenkanal-Port (51(j+1)) zu koppeln, wobei der Wellenlängenmultiplexer (51) dazu ausgelegt ist, die empfangenen Uplink-Signale mit dem gemultiplexten Uplink-Signal zu kombinieren, und die erste Schnittstelle (55) dazu ausgelegt ist, das gemultiplexte Uplink-Signal auf einem oder mehreren des einen oder der mehreren gemeinsamen optischen Wellenleiter (3c) an die erste Abschlussvorrichtung (1) zu senden.

## Revendications

1. Procédé de transmission de signaux dans un réseau de communication optique (200) avec un premier dispositif de terminaison (1) et au moins deux deuxièmes dispositifs de terminaison (2i) reliés au premier dispositif de terminaison (1), le procédé comprenant l'étape suivante :
envoyer, au moyen d'émetteurs des au moins deux deuxièmes dispositifs de terminaison (2i), des signaux de liaison montante sur des guides d'ondes optiques respectifs (3s) associés aux au moins deux deuxièmes dispositifs de terminaison (21) au premier dispositif de terminaison (1) ;
**caractérisé par** la réception, au moyen d'un commutateur (52), des signaux de liaison montante et la commutation, en fonction de longueurs d'onde des signaux de liaison montante, des signaux de liaison montante vers des ports de canaux de longueur d'onde (51(j)) correspondants d'un multiplexeur en longueur d'onde (51), dans lequel, si une dérive de longueur d'onde est détectée par un capteur associé au multiplexeur en longueur d'onde (51) ou dans le premier dispositif de terminaison (1), et si la dérive de longueur d'onde dépasse un seuil prédéfini, le capteur déclenche le désengagement d'un miroir (61 (i, j)), qui jusque là a été engagé pour coupler un signal de liaison montante d'un des au moins deux deuxièmes dispositifs de terminaison (2(i)) à un premier port de canal de longueur d'onde (51 (j)), et déclenche au même moment l'engagement d'un autre miroir 61 (i, j+1)) pour coupler le signal de liaison montante du dispositif de terminaison parmi les au moins deux deuxièmes dispositifs de terminaison (2(i)) à un deuxième port de canal de longueur d'onde (51(j+1)) ; la combinaison, au moyen du multiplexeur en longueur d'onde (51), des signaux de liaison montante reçus à un signal de liaison montante multiplexé ; et l'envoi du signal multiplexé à partir d'un port multiplexé (51(M)) du multiplexeur en longueur d'onde (51) sur un ou plusieurs guides d'ondes optiques communs (3c) vers le premier dispositif de terminaison (1).

2. Procédé selon la revendication 1,
**caractérisé en ce que**
le procédé comprend en outre l'étape suivante
accorder une longueur d'onde d'au moins un des émetteurs.

3. Procédé selon la revendication 1,
**caractérisé en ce que**
le procédé comprend en outre les étapes suivantes :
démultiplexer un signal de liaison descendante, envoyé par le premier dispositif de terminaison (1) sur le ou les guides d'ondes optiques communs (3c) vers au moins un des au moins deux deuxièmes dispositifs de terminaison (21), à partir du ou des guides d'ondes optiques communs (3c) avant que le signal de liaison descendante n'atteigne le multiplexeur en longueur d'onde (51) ;
guider le signal de liaison descendante sur une dérivation en fonction du multiplexeur en longueur d'onde (51) et du commutateur (52) ;
distribuer, de préférence au moyen d'une répartition de puissance ou d'un multiplexage par répartition en longueur d'onde, le signal de liaison descendante vers le guide d'ondes optique respectif (3s) associé à l'au moins un des au moins deux deuxièmes dispositifs de terminaison (2i) ; et
multiplexer le signal de liaison descendante sur le guide d'ondes optique respectif (3s) pour transmettre le signal de liaison descendante vers l'au moins un des au moins deux deuxièmes dispositifs de terminaison (2i).

4. Procédé selon la revendication 1,
**caractérisé en ce que**
le procédé comprend en outre les étapes suivantes :
acheminer des paquets de données en masse de liaison descendante, envoyés par le premier dispositif de terminaison (1) sur le ou les guides d'ondes optiques communs (3c) vers l'au moins un des au moins deux deuxièmes dispositifs de terminaison (2i) ;
guider les paquets de données en masse de liaison descendante vers le multiplexeur en longueur d'onde (51) et le commutateur (52) ;
acheminer les paquets de données en masse de liaison descendante, au moyen du multiplexeur en longueur d'onde (51) et du commutateur (52), vers le guide d'ondes optique respectif (3s) associé à l'au moins un des au moins deux deuxièmes dispositifs de terminaison (2i) ; et
multiplexer les paquets de données en masse de liaison descendante sur le guide d'ondes optique respectif (3s) pour transmettre les paquets de données en masse de liaison descendante vers l'au moins un des au moins deux deuxièmes dispositifs de terminaison (2i).

5. Procédé selon la revendication 4,
**caractérisé en ce que**
le procédé comprend en outre l'étape suivante :
éviter le blocage de commutateur, de préférence par programmation par répartition temporelle de flux de données montant et de flux de données en masse descendant ou en utilisant des miroirs de sélection de longueur d'onde ou semi-transparents.

6. Procédé selon la revendication 1,
**caractérisé en ce que**
l'étape de commutation, au moyen du commutateur (52), comprend en outre l'étape suivante :
commuter au moins deux signaux de liaison montante avec des longueurs d'onde associées à un port de canal de longueur d'onde (51(j)) Identique au moyen d'un ou de plusieurs miroirs semi-transparents (61 (i, j)) vers ledit port de canal de longueur d'onde (51 (j)) identique.

7. Dispositif d'agrégation (5) comprenant un commutateur (52), un multiplexeur en longueur d'onde (51) avec une multitude de ports de longueur d'onde (51 (j)), et des première et deuxième interfaces (54, 55), la deuxième interface (54) étant adaptée pour recevoir des signaux de liaison montante envoyés par des émetteurs d'au moins deux deuxièmes dispositifs de terminaison (2i) d'un réseau de communication optique (200) sur des guides d'ondes optiques respectifs (3s) vers un premier dispositif de terminaison (1) du réseau de communication optique (200), **caractérisé en ce que** le commutateur (52) est adapté pour commuter, en fonction des longueurs d'onde des signaux de liaison montante reçus, les signaux de liaison montante reçus vers des ports de longueur d'onde (51(j)) correspondants de la multitude de ports de longueur d'onde (51 (j)), dans lequel, si une dérive de longueur d'onde est détectée par un capteur associé au multiplexeur en longueur d'onde (51) ou dans le premier dispositif de terminaison (1), et si la dérive de longueur d'onde dépasse un seuil prédéfini, le capteur déclenche le désengagement d'un miroir (61 (i, j)), qui jusque là a été engagé pour coupler un signal de liaison montante d'un des au moins deux deuxièmes dispositifs de terminaison (2(i)) à un premier port de canal de longueur d'onde (51 (j)), et déclenche au même moment l'engagement d'un autre miroir 61(i, j+1)) pour coupler le signal de liaison montante du dispositif de terminaison parmi les au moins deux deuxièmes dispositifs de terminaison (2(i)) à un deuxième port de canal de longueur d'onde (51(j+1)), le multiplexeur en longueur d'onde (51) est adapté pour combiner les signaux de liaison montante reçus à un signal de liaison montante multiplexé, et la première interface (55) est adaptée pour envoyer le signal de liaison montante multiplexé sur un ou plusieurs guides d'ondes optiques communs (3c) vers le premier dispositif de terminaison (1).

8. Dispositif d'agrégation (5) selon la revendication 7,
**caractérisé en ce que**
le commutateur (52) comprend une matrice de commutation à N dimensions, N étant de préférence égal à 2, 3 ou 4.

9. Dispositif d'agrégation (5) selon la revendication 8,
**caractérisé en ce que**
la matrice de commutation est une matrice bidimensionnelle de miroirs MEMS (61 (i, j)).

10. Dispositif d'agrégation (5) selon la revendication 9,
**caractérisé en ce que**
au moins un des miroirs, de préférence tous les miroirs, est semi-transparent.

11. Dispositif d'agrégation (5) selon la revendication 7,
**caractérisé en ce que**
le multiplexeur en longueur d'onde (51) comprend un réseau sélectif planaire.

12. Dispositif d'agrégation (5) selon la revendication 7,
**caractérisé en ce que**
le dispositif d'agrégation (5) comprend un démultiplexeur (81) adapté pour démultiplexer un signal de liaison descendante, envoyé par le premier dispositif de terminaison (1) sur le ou les guides d'ondes optiques communs (3c) vers au moins un des au moins deux deuxièmes dispositifs de terminaison (2i), à partir du ou des guides d'ondes optiques communs (3c) avant que le signal de liaison descendante n'arrive au multiplexeur en longueur d'onde (51), un dispositif de distribution de liaison descendante (7) adapté pour distribuer, de préférence au moyen d'une répartition de puissance ou d'un multiplexage par répartition en longueur d'onde, le signal de liaison descendante vers le guide d'ondes optique respectif (3s) associé à l'au moins un des au moins deux deuxièmes dispositifs de terminaison (2i), un guide d'ondes qui contourne le multiplexeur en longueur d'onde (51) et le commutateur (52) et relle le démultiplexeur (81) au dispositif de distribution de liaison descendante (7), et des dispositifs de multiplexage (82) adaptés pour multiplexer le signal de liaison descendante sur le guide d'ondes optique respectif (3s) pour transmettre le signal de liaison descendante vers l'au moins un des au moins deux deuxièmes dispositifs de terminaison (2i).

13. Réseau de communication optique (200) comprenant un premier dispositif de terminaison (1) adapté pour recevoir un signal de liaison montante multiplexé comprenant au moins deux signaux de liaison montante par l'intermédiaire d'un ou de plusieurs guides d'ondes optiques communs (3c), au moins deux deuxièmes dispositifs de terminaison reliés (2i) reliés au premier dispositif de terminaison (1) par l'intermédiaire d'une liaison de guide d'ondes optique (3) comprenant un ou plusieurs du ou des guides d'ondes optiques communs (3c) et des guides d'ondes optiques respectifs (3s) associés aux au moins deux deuxièmes dispositifs de terminaison (2i) et adaptés pour transmettre les au moins deux signaux de liaison montante sur les guides d'ondes optiques respectifs (3s) associés aux au moins deux deuxièmes dispositifs de terminaison (2i) de la liaison de guide d'ondes optique (3) vers le premier dispositif de terminaison (1), et un dispositif d'agrégation (5) comprenant un commutateur (52), un multiplexeur en longueur d'onde (51) avec une multitude de ports de longueur d'onde (51(j)), et des première et deuxième interfaces (54, 55), la deuxième interface (54) étant adaptée pour recevoir des signaux de liaison montante envoyés par des émetteurs des au moins deux deuxièmes dispositifs de terminaison (2i) du réseau de communication optique (200) sur des guides d'ondes optiques respectifs (3s) vers le premier dispositif de terminaison (1) du réseau de communication optique (200), **caractérisé en ce que** le commutateur (52) est adapté pour commuter, en fonction des longueurs d'onde des signaux de liaison montante reçus, les signaux de liaison montante reçus vers des ports de longueur d'onde (51 (j)) correspondants de la multitude de ports de longueur d'onde (51(j)), dans lequel, si une dérive de longueur d'onde est détectée par un capteur associé au multiplexeur en longueur d'onde (51) ou dans le premier dispositif de terminaison (1), et si la dérive de longueur d'onde dépasse un seuil prédéfini, le capteur déclenche le désengagement d'un miroir (61 (i, j)), qui jusque là a été engagé pour coupler un signal de liaison montante d'un des au moins deux deuxièmes dispositifs de terminaison (2(i)) à un premier port de canal de longueur d'onde (51 (j)), et déclenche au même moment l'engagement d'un autre miroir 61 (i, j+1)) pour coupler le signal de liaison montante du dispositif de terminaison parmi les au moins deux deuxièmes dispositifs de terminaison (2(1)) à un deuxième port de canal de longueur d'onde (51(j+1)), le multiplexeur en longueur d'onde (51) est adapté pour combiner les signaux de liaison montante reçus à un signal de liaison montante multiplexé, et la première interface (55) est adaptée pour envoyer le signal de liaison montante multiplexé sur un ou plusieurs du ou des guides d'ondes optiques communs (3c) vers le premier dispositif de terminaison (1).
